# EUROPÄISCHE PATENTSCHRIFT

(11) **EP 1 493 219 B1**
(45) Veröffentlichungstag und Bekanntmachung des Hinweises auf die Patenterteilung: **11.10.2006**
(21) Anmeldenummer: 03730171.0
(22) Anmeldetag: 02.04.2003
(51) Int. Cl.: H02K 3/12, H02K 15/04

(54) **WICKLUNG FÜR EINE DYNAMOELEKTRISCHE MASCHINE**
WINDING FOR A DYNAMO-ELECTRIC MACHINE
ENROULEMENT DESTINE A UNE MACHINE DYNAMOELECTRIQUE

(30) Priorität: 11.04.2002 DE 10215937
(43) Veröffentlichungstag der Anmeldung: 05.01.2005
(73) Patentinhaber: Alstom Technology Ltd, 5400 Baden (CH)
(72) Erfinder: KLAMT, Thomas, CH-5107 Schinznach-Dorf (CH); WAGNER, Ulrich, CH-5400 Baden (CH)
(86) Internationale Anmeldenummer: PCT/EP2003/050088
(87) Internationale Veröffentlichungsnummer: WO 2003/085803

(56) Entgegenhaltungen:
- DE-A- 2 906 554
- DE-C- 932 972
- US-A- 4 658 169
- US-A- 5 789 840
- PATENT ABSTRACTS OF JAPAN vol. 5, no. 99 (E-63), 26. Juni 1981 (1981-06-26) -& JP 56 041754 A (FUJI ELECTRIC CO LTD), 18. April 1981 (1981-04-18)
- PATENT ABSTRACTS OF JAPAN vol. 18, no. 595 (E-1630), 14. November 1994 (1994-11-14) -& JP 06 225503 A (FUJI ELECTRIC CO LTD), 12. August 1994 (1994-08-12)

## Beschreibung

### TECHNISCHES GEBIET

Die vorliegende Erfindung bezieht sich auf das Gebiet der elektrischen Maschinen. Sie betrifft eine Wicklung für eine dynamoelektrische Maschine gemäss dem Oberbegriff des Anspruchs 1.

Eine solche Wicklung ist z.B. aus der Druckschrift US-A-5,777,417 (Fig. 1) oder der Druckschrift US-A-4,385,254 bekannt.

### STAND DER TECHNIK

Die Statorwicklung eines Hydrogenerators besteht aus sogenannten Roebelstäben (siehe z.B. die eingangs genannte US-A-5,777,417), welche aus mehreren einzelnen Kupferteilleitern hergestellt sind. Eine Wicklung besteht meistens aus einer Oberlage und einer Unterlage, also zwei Stäben, die übereinander in einer (axialen) Nut des Statorblechkörpers liegen. Für die Verschaltung der Generatorwicklung müssen die Enden dieser Stäbe (Stabenden) gebogen werden, und zwar sowohl tangential als auch radial. Diese verformten Stabenden werden als Bügel oder allgemein als Wickelkopf bezeichnet. Die Biegungen im Wickelkopf werden nach bestimmten Richtlinien der erforderlichen elektrischen Luftabstände und der sogenannten Schrittweite konstruiert. Die Schrittweite bezeichnet dabei die Anzahl der Nuten, die ein Stab "überschreitet".

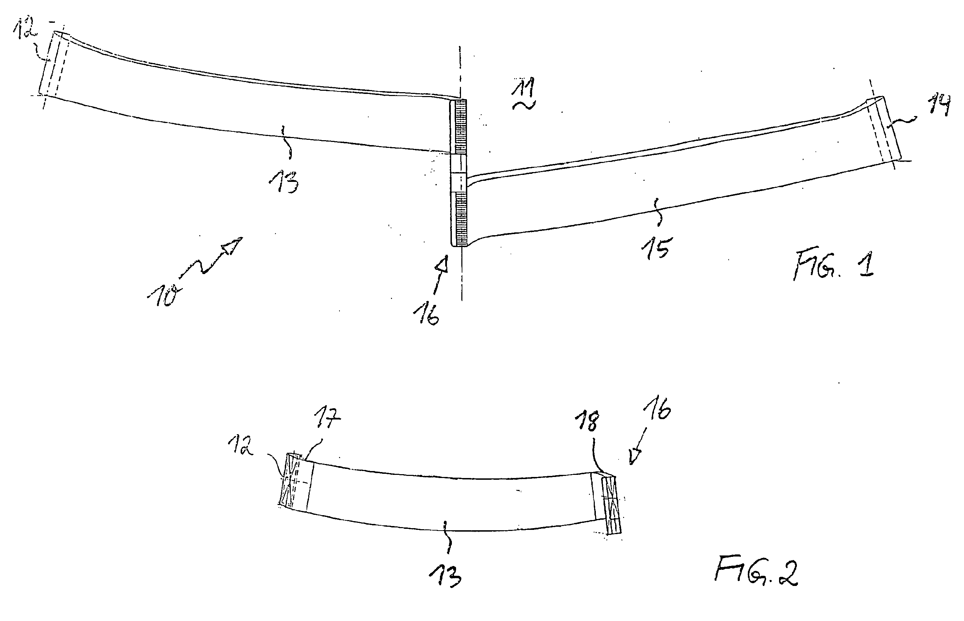

In Fig. 1 und 2 ist ein Ausschnitt aus einem solchen aus dem Stand der Technik bekannten Wickelkopf 11 einer Wicklung 10 (Fig. 1) sowie ein gebogenes Stabende eines einzelnen Wicklungsstabes in der Draufsicht in Richtung der Maschinenachse dargestellt. Die im Statorblechkörper in axialer Richtung verlaufenden Wicklungsstäbe, von denen in Fig. 1 zwei ausgewählte Wicklungsstäbe 12, 14 wiedergegeben sind, werden im Wicklungskopf paarweise miteinander verbunden. Dies geschieht an einer Verbindungsstelle 16, die - in axialer Richtung betrachtet - in einem mittleren Bereich zwischen den Wicklungsstäben 12, 14 liegt. Die aus dem Statorblechkörper herausragenden Stabenden 13, 15 werden dazu zunächst in einer ersten Tangentialbiegung (17 in Fig. 2) aus der axialen Richtung heraus in Richtung auf die Verbindungsstelle 16 umgebogen und kurz vor der Verbindungsstelle 16 in einer zweiten Tangentialbiegung (18 in Fig. 2) wieder in die axiale Richtung zurückgebogen. Die zurückgebogenen Endabschnitte der Stabenden 13, 15 kommen dabei in der Verbindungsstelle 16 übereinander zu liegen.

Die in Fig. 1 strichliert eingezeichneten, in radialer Richtung verlaufenden Mittelebenen der Wicklungsstäbe 12, 14 und der Verbindungsstelle 16 schliessen dabei jeweils einen Winkel ein, der umso grösser ist, je grösser die o.g. Schrittweite ausfällt. Damit die in Fig. 1 und 2 gezeigte Konfiguration der Stabenden verwirklicht werden kann, werden die Stabenden 13, 15 - wie dies in Fig. 2 besonders deutlich zu sehen ist - zwischen den Tangentialbiegungen 17 und 18 mit einer durchgehenden, stetigen Krümmung (Biegung) versehen. Diese Biegungen werden im Stand der Technik per Hand mittels eines Biegewerkzeuges erzeugt. Diese Art der Verformung hat jedoch den Nachteil, dass sie sehr aufwendig durchzuführen ist. Insbesondere ist es notwendig, für jeden Generator - der meist eine Einzelanfertigung ist - ein neues Biegewerkzeug zu beschaffen, da jedes Mal die Konstruktion der Wicklungsstäbe unterschiedlich ist.

Aus der JP-A-56041754 und der JP-A-06225503 sind paarweise Verbindungen zwischen Wicklungsstäben bekannt, bei denen die aus dem Blechpaket herausragenden Stabenden jeweils im Bereich des Austritts aus dem Blechpaket und am unmittelbaren Stabende gefasst und dann in die Endkonfiguration gebogen werden. Das Verformungsverhalten des Stabes zwischen den Einspannstellen ist dabei nicht eindeutig definiert und führt zu unerwünschten Torsionsverformungen.

Derartige Torsionsverformungen treten auch bei der Formgebung der zu verbindenden Stabenden auf, wie sie in der DE-A-29 06 554 (Fig. 1 a,b) oder in den Druckschriften US-A-5,789,840 und US-A-4,658,169 gezeigt sind.

### DARSTELLUNG DER ERFINDUNG

Es ist daher Aufgabe der Erfindung, eine Wicklung zu schaffen, die aufgrund ihrer gewählten Konfiguration einfacher und flexibler herzustellen ist.

Die Aufgabe wird durch die Gesamtheit der Merkmale des Anspruchs 1 gelöst. Besondere Ausführungsarten der Erfindung sind in den abhängigen Ansprüchen wiedergegeben.
Der Kern der Erfindung besteht darin, bei den Stabenden anstelle der gleichmässigen Krümmung (Biegung) mehrere gerade Abschnitte auszubilden, die untereinander durch dazwischenliegende Knicke getrennt sind. Unter Knick wird hierbei eine vergleichsweise enge (scharfe) Biegung mit einem kleinen Biegeradius im Bereich von wenigen cm verstanden. Solche Knicke können einfach und flexibel mittels einer Maschine in die Stabenden eingebracht werden, so dass unterschiedliche Konfigurationen der Wickelköpfe bei unterschiedlichen Maschinen ohne zusätzlichen Aufwand leicht realisiert werden können.

Die Erfindung zeichnet sich dadurch aus, dass die Verbindungsstelle eines Paares von Wicklungsstäben zwischen den Wicklungsstäben angeordnet ist, dass die Stabenden jeweils in einer ersten Tangentialbiegung aus der axialen Richtung heraus zur Verbindungsstelle hin umgebogen sind und kurz vor der Verbindungsstelle in einer zweiten Tangentialbiegung zurück in die axiale Richtung gebogen sind, und dass die Stabenden jeweils zwischen den beiden Tangentialbiegungen wenigstens zwei gerade Abschnitte umfassen, die durch einen Knick voneinander getrennt sind. Hierdurch können auf besonders einfache Weise die meisten Wickelkopf-Konfigurationen abgedeckt werden.

Dabei verlaufen die Stabenden der Wicklungsstäbe zwischen den Tangentialbiegungen jeweils im wesentlichen in einer Ebene, und der Knick zwischen den wenigstens zwei geraden Abschnitten liegt ebenfalls in dieser Ebene.

Bevorzugt weisen die Wicklungsstäbe einen Querschnitt in Form eines länglichen Rechteckes auf, sind die Wicklungsstäbe innerhalb des Blechpaketes mit den Längsseiten ihres Querschnitts in radialer Richtung orientiert, und sind die Stabenden der Wicklungsstäbe zwischen den Tangentialbiegungen mit ihren Längsseiten parallel zur Ebene orientiert, in der die Stabenden (23, 23'; 25, 25') verlaufen.

Es hat sich dabei bewährt, wenn der Knick einen Knickwinkel zwischen grösser 0° und 20°, bevorzugt einen Knickwinkel zwischen 14° und 17° aufweist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in der Draufsicht in Richtung der Maschinenachse ein Paar von Wicklungsstäben des Stators eines Hydrogenerators, die im Wickelkopf gemäss dem Stand der Technik miteinander verbunden sind;
- Fig. 2: das gebogene Stabende eines einzelnen Stabes aus Fig. 1;
- Fig. 3: in einer perspektivischen Darstellung ein Paar von Wicklungsstäben in ihrer für den Einsatz im Stator eines Hydrogenerators gebogenen Konfiguration gemäss einem bevorzugten Ausführungsbeispiel der Erfindung;
- Fig. 4: in einer vergrösserten Darstellung das rechte Stabende des unteren Wicklungsstabes der Konfiguration aus Fig. 3; und
- Fig. 5: die Verbindung der beiden Wicklungsstäbe aus Fig. 3 im rechten Wickelkopf in der Draufsicht in Richtung der Maschinenachse.

### WEGE ZUR AUSFÜHRUNG DER ERFINDUNG

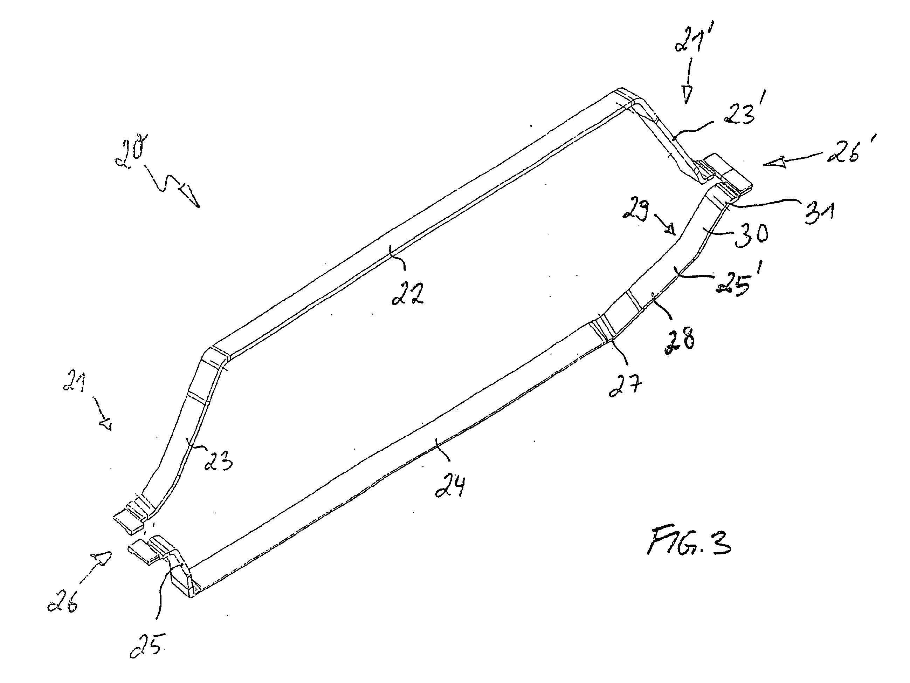

In Fig. 3 ist in einer perspektivischen Darstellung ein Paar von Wicklungsstäben in ihrer für den Einsatz im Stator eines Hydrogenerators gebogenen Konfiguration gemäss einem bevorzugten Ausführungsbeispiel der Erfindung dargestellt. Die Wicklungsstäbe 22 und 24 sind Teil einer Wicklung 20, die aus einer Vielzahl von Stäben besteht. Sie Wicklungsstäbe 22, 24 haben einen geraden mittleren Abschnitt, der parallel zur Maschinenachse verläuft und mit dem die Stäbe in entsprechende Nuten im Statorblechpaket untergebracht und verkeilt sind. In der Regel sind in einer Nut je zwei Wicklungsstäbe übereinander angeordnet, wie dies in Fig. 1 der US-A-4,385,254 gezeigt ist.

Die Wicklungsstäbe 22, 24 gehen an beiden Seiten in entsprechende Stabenden 23, 23' bzw. 25, 25' über, die ausserhalb des Statorblechpakets liegen und innerhalb eines Wickelkopfes 21 bzw. 21' paarweise miteinander verbunden sind, um eine Wicklung mit einer Vielzahl von Windungen zu bilden. In Fig. 3 sind die Stabenden 23', 25' der beiden Wicklungsstäbe 22, 24 im rechten Wickelkopf 21' in einer Verbindungsstelle 26' miteinander verbunden. Im linken Wickelkopf 21 sind die Stabenden 23, 25 in einer Verbindungsstelle 26 jeweils mit anderen Stabenden oder mit Verbindern bzw. Ableitern verbunden, die nicht dargestellt sind.

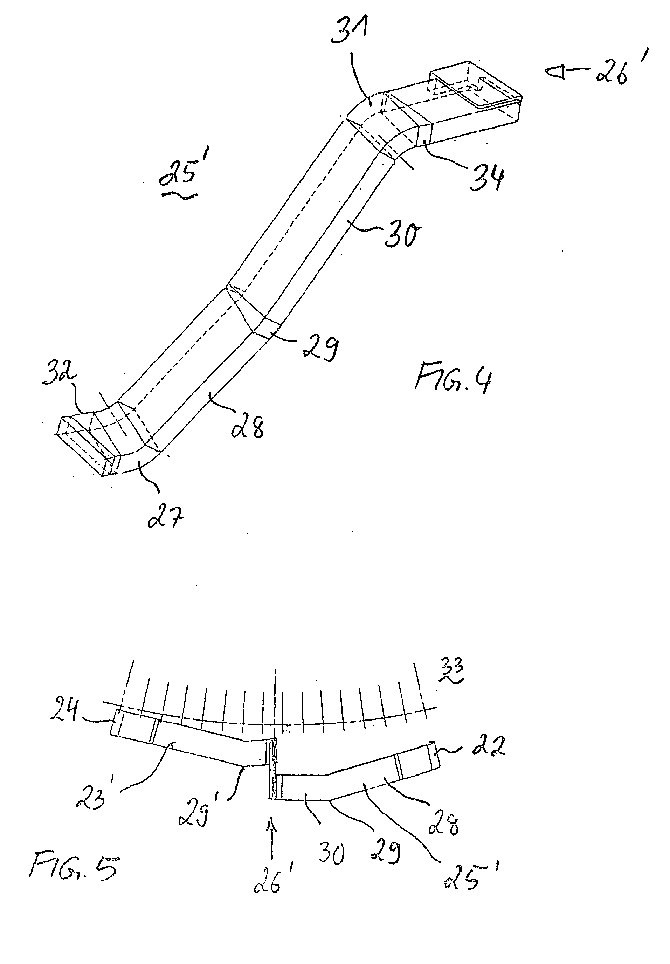

Wie bereits eingangs erwähnt, sind die Stabenden mehrfach zu den Verbindungsstellen 26, 26' hin gebogen, um eine entsprechende Verbindung zwischen den Wicklungsstäben zu ermöglichen. Die Konfiguration der Stabenden 23, 23' bzw. 25, 25' gemäss der Erfindung kann am Beispiel des Stabendes 25' aus Fig. 3 und Fig. 4 näher erläutert werden. Das Stabende 25' ist wiederum mit einer ersten Tangentialbiegung 27 aus der axialen Richtung heraus zur Verbindungsstelle 26' und mit einer zweiten Tangentialbiegung 31 kurz vor der Verbindungsstelle 26' wieder zurück in die axiale Richtung gebogen. Zwischen den Tangentialbiegungen 27, 31 ist das Stabende 25' abschnittweise gerade, d.h., es setzt sich aus geraden Abschnitten 28, 30 zusammen, die durch einen (vergleichsweise scharfen) Knick 29 getrennt (bzw. miteinander verbunden) sind. Wie bereits weiter oben erwähnt, ist der Knick 29 eigentlich eine enge Biegung, die auf der Innenseite einen Biegeradius von z.B. 30 oder 60 mm aufweist. Im Beispiel der Fig. 3, 4 sind nur zwei gerade Abschnitte 28, 30 vorhanden, die nur durch einen Knick 29 getrennt sind. Es versteht sich jedoch von selbst, dass je nach Gesamtkonfiguration weitere gerade Abschnitte und Knicke vorgesehen werden können. Ein weiterer Knick 32 kann auch zwischen der ersten Tangentialbiegung 27 und dem eigentlichen Wicklungsstab 24 vorhanden sein. Dasselbe gilt für einen Knick 34 hinter der zweiten Tangentialbiegung 31.

In axialer Richtung gesehen ergibt sich für die beiden Wicklungsstäbe 22, 24 des Stators 33 an der Verbindungsstelle 26' die in Fig. 5 dargestellte Konfiguration. Dem zwischen den geraden Abschnitten 28 und 30 angeordneten Knick 29 des Stabendes 25' entspricht beim Stabende 23' der Knick 29'. Die Knicke 29, 29', 32, 34 werden vorzugsweise maschinell in die Wicklungsstäbe bzw. Stabenden eingebracht. Sie können je nach Bedarf unterschiedliche Knickwinkel aufweisen. In der Praxis insgesamt bewährt haben sich Knickwinkel zwischen grösser 0° und 20°. Insbesondere bewährt haben sich Knickwinkel zwischen 14° und 17°. Die Wicklungsstäbe 22, 24 haben einen Querschnitt in Form eines länglichen Rechteckes. Während sie innerhalb des Blechpaketes mit den Längsseiten ihres Querschnitts in radialer Richtung orientiert sind, sind die Stabenden 23, 23'; 25, 25' der Wicklungsstäbe 22, 24 zwischen den Tangentialbiegungen 27, 31 mit ihren Längsseiten parallel zur Ebene orientiert, in der die Stabenden 23, 23'; 25, 25' verlaufen. Die Knicke liegen jeweils in dieser Ebene.

### BEZUGSZEICHENLISTE

- 10: Wicklung
- 11: Wickelkopf
- 12,14: Wicklungsstab (Statorstab)
- 13,15: Stabende
- 16: Verbindungsstelle
- 17,18: Tangentialbiegung
- 20: Wicklung
- 21,21': Wickel kopf
- 22,24: Wicklungsstab (Statorstab)
- 23,23': Stabende
- 25,25': Stabende
- 26,26': Verbindungsstelle
- 27,31: Tangentialbiegung
- 28,30: gerader Abschnitt
- 29,29',32, 34: Knick
- 33: Stator

## Patentansprüche

1. Wicklung (20) für eine dynamoelektrische Maschine, insbesondere für den Stator (33) eines Hydrogenerators, welche Wicklung (20) eine Mehrzahl von in axialer Richtung in einem Blechpaket verlaufenden Wicklungsstäben (22, 24) umfasst, deren aus dem Blechpaket herausragende Stabenden (23, 23'; 25, 25') aus der axialen Richtung heraus abgebogen und an Verbindungsstellen (26, 26') paarweise miteinander verbunden sind, wobei die Verbindungsstelle (26, 26') eines Paares von Wicklungsstäben (22, 24) zwischen den Wicklungsstäben (22, 24) angeordnet ist, und die Stabenden (23, 23'; 25, 25') jeweils in einer ersten Tangentialbiegung (27) aus der axialen Richtung heraus zur Verbindungsstelle (26, 26') hin umgebogen sind und kurz vor der Verbindungsstelle (26, 26') in einer zweiten Tangentialbiegung (31) zurück in die axiale Richtung gebogen sind, **dadurch gekennzeichnet, dass** die Stabenden (23, 23'; 25, 25') jeweils zwischen den beiden Tangentialbiegungen (27, 31) wenigstens zwei gerade Abschnitte (28, 30) umfassen, die durch einen Knick (29, 29') voneinander getrennt sind, dass die Stabenden (23, 23'; 25, 25') der Wicklungsstäbe (22, 24) zwischen den Tangentialbiegungen (27, 31) jeweils im wesentlichen in einer Ebene verlaufen, und dass der Knick (29, 29') zwischen den wenigstens zwei geraden Abschnitten (28, 30) ebenfalls in dieser Ebene liegt.

2. Wicklung nach Anspruch 1, **dadurch gekennzeichnet, dass** die Wicklungsstäbe (22, 24) einen Querschnitt in Form eines länglichen Rechteckes aufweisen, dass die Wicklungsstäbe (22, 24) innerhalb des Blechpaketes mit den Längsseiten ihres Querschnitts in radialer Richtung orientiert sind, und dass die Stabenden (23, 23'; 25, 25') der Wicklungsstäbe (22, 24) zwischen den Tangentialbiegungen (27, 31) mit ihren Längsseiten parallel zur Ebene orientiert sind, in der die Stabenden (23, 23'; 25, 25') verlaufen.

3. Wicklung nach Anspruch 1 oder 2, **dadurch gekennzeichnet, dass** der Knick (29, 29') einen Knickwinkel zwischen grösser 0° und 20° aufweist.

4. Wicklung nach Anspruch 3, **dadurch gekennzeichnet, dass** der Knick (29, 29') einen Knickwinkel zwischen 14° und 17° aufweist.

## Claims

1. Winding (20) for a dynamo-electric machine, in particular for the stator (33) of a hydrogenerator, which winding (20) comprises a plurality of winding bars (22, 24), which run in the axial direction in a laminate stack and whose bar ends (23, 23'; 25, 25') protruding out of the laminate stack are bent up out of the axial direction and are connected to one another in pairs at connection points (26, 26'), the connection point (26, 26') of a pair of winding bars (22, 24) being arranged between the winding bars (22, 24) and the bar ends (23, 23'; 25, 25') in each case being bent over at a first tangential bend (27) out of the axial direction towards the connection point (26, 26') and being bent back into the axial direction at a second tangential bend (31) shortly before the connection point (26, 26'), **characterized in that** the bar ends (23, 23'; 25, 25') in each case comprise at least two straight sections (28, 30) between the two tangential bends (27, 31), which sections (28, 30) are separated from one another by a kink (29, 29'), **in that** the bar ends (23, 23'; 25, 25') of the winding bars (22, 24) in each case run essentially in one plane between the tangential bends (27, 31), and **in that** the kink (29, 29') likewise lies in this plane between the at least two straight sections (28, 30).

2. Winding according to Claim 1, **characterized in that** the winding bars (22, 24) have a cross section in the form of an elongate rectangle, **in that** the winding bars (22, 24) are oriented within the laminate stack with the longitudinal sides of its cross section in the radial direction, and **in that** the bar ends (23, 23'; 25, 25') of the winding bars (22, 24) are oriented between the tangential bends (27, 31) with their longitudinal sides parallel to the plane in which the bar ends (23, 23'; 25, 25') run.

3. Winding according to Claim 1 or 2, **characterized in that** the kink (29, 29') has a kink angle of between greater than 0° and 20°.

4. Winding according to Claim 3, **characterized in that** the kink (29, 29') has a kink angle of between 14° and 17°.

## Revendications

1. Enroulement (20) pour une machine dynamoélectrique, notamment pour le stator (33) d'un générateur hydroélectrique, lequel enroulement (20) comprend une pluralité de barres d'enroulement (22, 24) qui s'étendent dans le sens axial dans un corps en tôles, dont les extrémités de barre (23, 23' ; 25, 25') qui font saillie hors du corps en tôles sont pliées depuis la direction axiale et reliées entre elles par paires au niveau des points de liaison (26, 26'), les points de liaison (26, 26') d'une paire de barres d'enroulement (22, 24) étant disposés entre les barres d'enroulement (22, 24) et les extrémités de barre (23, 23' ; 25, 25') étant à chaque fois pliées en un premier cintrage tangentiel (27) depuis la direction axiale en direction du point de liaison (26, 26') puis de nouveau repliées dans la direction axiale juste avant le point de liaison (26, 26') en un deuxième cintrage tangentiel (31), **caractérisé en ce que** les extrémités de barre (23, 23' ; 25, 25') comprennent à chaque fois entre les deux cintrages tangentiels (27, 31) au moins deux sections droites (28, 30) qui sont séparées l'une de l'autre par un coude (29, 29'), que les extrémités de barre (23, 23' ; 25, 25') des barres d'enroulement (22, 24) entre les cintrages tangentiels (27, 31) s'étendent à chaque fois essentiellement dans un plan et que le coude (29, 29') entre les au moins deux sections droites (28, 30) se trouve également dans ce plan.

2. Enroulement selon la revendication 1, **caractérisé en ce que** les barres d'enroulement (22, 24) présentent une section transversale en forme de rectangle allongé, que les barres d'enroulement (22, 24) à l'intérieur du corps en tôles sont orientées avec les côtés longs de leur section transversale dans le sens radial et que les extrémités de barre (23, 23' ; 25, 25') des barres d'enroulement (22, 24), entre les cintrages tangentiels (27, 31), sont orientées avec leurs côtés longs parallèlement au plan dans lequel s'étendent les extrémités de barre (23, 23' ; 25, 25').

3. Enroulement selon la revendication 1 ou 2, **caractérisé en ce que** le coude (29, 29') présente un angle de coude entre plus de 0° et 20°.

4. Enroulement selon la revendication 3, **caractérisé en ce que** le coude (29, 29') présente un angle de coude entre 14° et 17°.
